# DEMANDE DE BREVET EUROPEEN

(11) **EP 3 875 310 A1**
(43) Date de publication de la demande: **08.09.2021**
(21) Numéro de dépôt: 21160729.6
(22) Date de dépôt: 04.03.2021
(51) Int. Cl.: B60L 53/80, B60L 58/14, B60L 53/36

(54) **INSTALLATION DE MANUTENTION D'OBJETS COMPRENANT UNE FLOTTE DE VÉHICULES DE TYPE ROBOTS NAVETTES GUIDÉS AUTOMATIQUEMENT À DISTANCE POUR LE TRANSPORT D'OBJETS**

(30) Priorité: 05.03.2020 FR 2002217
(71) Demandeur: Solystic, 92220 Bagneux (FR)
(72) Inventeur: CAILLON, Christophe, 91220 BRETIGNY SUR ORGE (FR); MIETTE, Emmanuel, 95210 SAINT GRATIEN (FR)
(74) Mandataire: Prugneau, Philippe

(57) **Abrégé**

L'invention concerne une installation (1) de manutention d'objets (3) comprenant une flotte de véhicules (2) de type robots navettes guidés automatiquement à distance pour le transport desdits objets, chaque véhicule embarquant une batterie conçue pour l'alimenter électriquement pour ses déplacements, l'installation comprenant une station d'échange (5) de batteries comprenant un emplacement de stationnement (6) partagé les véhicules pour stationner un desdits véhicules et un bras robotisé (9) conçu pour échanger automatiquement une batterie déchargée d'un véhicule par une batterie chargée lorsque ledit véhicule est stationné sur l'emplacement, ladite installation de manutention comprenant également un système d'information (18) conçu pour recevoir en temps réel des données numériques représentatives du niveau de charge des batteries et pour déterminer en retour un ordre de priorité selon lequel l'échange des batteries se fait en commençant par le véhicule ayant la batterie la moins chargée au véhicule ayant la batterie la plus chargée.

## Description

### Domaine technique

L'invention concerne une installation de manutention d'objets comprenant une flotte de véhicules de type robots navettes guidés automatiquement à distance pour le transport d'objets, chaque véhicule embarquant une batterie conçue pour l'alimenter électriquement dans ses déplacements.

### Technique antérieure

Il est courant aujourd'hui d'utiliser des véhicules de type robots navettes guidés automatiquement à distance, dits « AGV » pour Automatic Guided Vehicule, pour déplacer des objets de type colis ou paquets dans des centres logistiques.

Ces véhicules sont généralement équipés de batteries qui leur confèrent une certaine autonomie de déplacement.

Lorsque les batteries atteignent un niveau de charge trop faible, les véhicules se dirigent automatiquement vers un point de charge pour y être rechargée pendant plusieurs heures.

Le nombre croissant de colis ou paquets à déplacer nécessite d'augmenter le nombre de véhicules et de points de charge dans les installations de manutention d'objets ce qui augmente les coûts et la surface occupée au sol.

### Résumé de l'invention

L'invention a donc pour objectif de remédier aux problèmes précités en proposant une installation de manutention d'objets qui optimise le temps d'utilisation des véhicules de sorte à limiter le nombre de véhicules et de stations de charge.

A cet effet, l'invention a pour objet une installation de manutention d'objets comprenant une flotte de véhicules de type robots navettes guidés automatiquement à distance pour le transport desdits objets, chaque véhicule embarquant une batterie conçue pour l'alimenter électriquement pour ses déplacements, l'installation comprenant une station d'échange de batteries comprenant un emplacement de stationnement partagé par la flotte de véhicules pour stationner un desdits véhicules et un bras robotisé conçu pour échanger automatiquement une batterie déchargée d'un véhicule par une batterie chargée lorsque ledit véhicule est stationné sur l'emplacement de stationnement, ladite installation de manutention d'objets comprenant également un système d'information conçu pour recevoir en temps réel des données numériques représentatives du niveau de charge des batteries des véhicules de la flotte et pour déterminer en retour un ordre de priorité selon lequel l'échange des batteries des véhicules de la flotte se fait en commençant par le véhicule ayant la batterie la moins chargée au véhicule ayant la batterie la plus chargée, caractérisée en ce que le système d'information est conçu pour détecter cycliquement si la batterie d'un certain véhicule de la flotte atteint un niveau de charge critique correspondant à un niveau de charge le plus bas que peut présenter la batterie pour permettre audit certain véhicule de revenir vers la station d'échange et de se positionner sur ledit emplacement de stationnement une fois que les véhicules ayant des batteries présentant un niveau de charge inférieure au niveau de charge de la batterie dudit certain véhicule auront échangé leur batterie, et en ce qu'en réponse à cette détection, le système d'information est conçu pour forcer lesdits véhicules dont le niveau de charge de batterie est inférieure au niveau de charge de la batterie dudit certain véhicule ayant atteint le niveau de charge critique à revenir vers la station d'échange et à se positionner les uns après les autres en suivant l'ordre de priorité sur ledit emplacement de stationnement pour l'échange de batterie.

L'idée à la base de l'invention consiste à échanger les batteries déchargées par des batteries chargées en tenant compte du niveau de charge de l'ensemble de la flotte de véhicules.

Plus particulièrement, l'idée consiste à envoyer les véhicules les uns après les autres vers la station de charge à intervalles réguliers pour éviter les embouteillages devant l'emplacement de stationnement et pour optimiser le temps d'utilisation des véhicules en reculant au maximum le moment du retour des véhicules vers la station d'échange pour leur échange de batterie.

L'invention consiste donc à définir un niveau de charge critique pour un certain véhicule qui permet d'identifier dans le temps une panne future dudit certain véhicule et un point de départ pour le rapatriement à la station d'échange des véhicules ayant une batterie avec un niveau de charge inférieur afin que le certain véhicule puisse être envoyé à son tour à la station d'échange pour le remplacement de sa batterie avant de tomber en panne.

L'installation de manutention d'objets selon l'invention peut également présenter les particularités suivantes :
- le système d'information est conçu pour forcer lesdits véhicules à revenir vers la station d'échange et à se positionner sur ledit emplacement de stationnement pour l'échange de batterie à des intervalles de temps réguliers correspondant au temps d'occupation de l'emplacement de stationnement par un véhicule pour l'échange de sa batterie ;
- le système d'information considère la distance la plus grande que pourrait parcourir ledit certain véhicule pour revenir à la station d'échange pour définir le niveau le plus bas de batterie ;
- la fréquence du cycle de détection du niveau critique d'un véhicule correspond au temps d'occupation de la station d'échange par un véhicule pour l'échange de sa batterie ;
- chaque véhicule comprend une fente verticale ouverte sur le dessus conçue pour autoriser une insertion/extraction verticale des batteries par le bras robotisé ;
- la station de permutation comprend au moins un chargeur de batterie en forme de bac ouvert sur le dessus conçu pour autoriser une insertion/extraction verticale des batteries par le bras robotisé.

### Description des dessins

La présente invention sera mieux comprise et d'autres avantages apparaîtront à la lecture de la description détaillée de l'invention prise à titre d'exemple nullement limitative et illustrée par les dessins annexés, dans lesquels :
[Fig.1] La figure 1 représente schématiquement une installation de manutention d'objets selon l'invention ;
[Fig.2] La figure 2 représente schématiquement l'extrémité d'un bras robotisé selon l'invention;
[Fig.3] La figure 3 représente schématiquement un véhicule selon l'invention sur lequel est monté une plateforme de portage pour objets ;
[Fig.4] La figure 4 est un histogramme représentant un niveau critique de charge pour un certain nombre de véhicules de l'installation de manutention d'objets selon l'invention.

### Description détaillée de l'invention

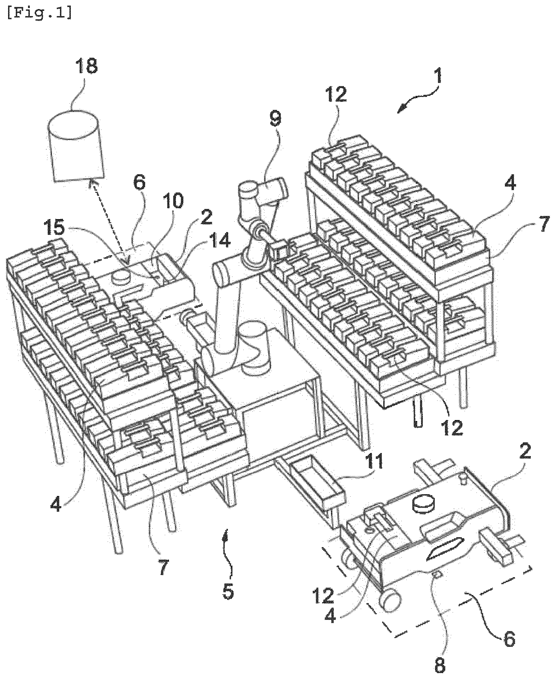

L'installation 1 de manutention d'objets 3 selon l'invention représentée sur la figure 1 comprend des véhicules 2 de type robots navettes guidés automatiquement à distance pour déplacer des objets 3.

Ces véhicules appelés également AGV pour « Automatic Guided Véhiculé » sont équipés chacun d'une batterie 4 interchangeable et rechargeable apte à alimenter électriquement le véhicule 2 dans ses déplacements.

L'installation 1 de manutention d'objets comprend également une ou plusieurs stations d'échange 5 de batteries 4, visible sur la figure 1, conçues pour échanger automatiquement les batteries 4 déchargées des véhicules 2 par des batteries 4 chargées.

Chaque station d'échange 5 comprend au moins un emplacement de stationnement 6 pour stationner un véhicule 2, ici deux emplacements de stationnement 6 délimités par un marquage au sol en pointillés chacun occupé par un véhicule 2 comme représentés sur la figure 1, et des chargeurs 7 de batteries 4 sous la forme de bacs ouverts sur le dessus.

Un emplacement de stationnement 6 selon l'invention se présente par exemple sous la forme d'une surface plane délimitée au sol avec des moyens de détection 8 apte à détecter la présence d'un véhicule stationné sur l'emplacement, ici un QRcode.

L'utilisation de deux emplacements de stationnement 6 permet avantageusement d'échanger une batterie 4 d'un premier véhicule 2 sur un premier emplacement 6 pendant qu'un second véhicule 2 est en phase d'approche du second emplacement de stationnement 6 ou en phase de redémarrage après avoir récupéré une batterie 4 chargée.

La station d'échange 5 comprend également un bras robotisé 9 conçu pour procéder automatiquement à l'échange des batteries 4 lorsque le véhicule 2 est stationné sur un emplacement de stationnement 6.

Le bras robotisé 9 comprend six axes de déplacement et présentera une longueur suffisante, ici 130cm, pour pouvoir accéder aux véhicules 2 stationnés sur les emplacements de stationnement 6 et aux chargeurs 7 de batterie 4 de la station d'échange 5.

Chaque véhicule 2 comprend une fente 10 verticale ouverte sur le dessus conçue pour autoriser une insertion/extraction verticale des batteries 4 par le bras robotisé 9.

Les chargeurs 7 de batterie 4 se présentent sous la forme de bac ouvert sur le dessus de sorte à autoriser, de la même manière que pour les véhicules 2, une insertion/extraction verticale des batteries 4 par le bras robotisé 9.

Comme représenté sur la figure 1, le bras robotisé 9 est agencé au centre de la station d'échange 5 avec les deux emplacements de stationnement 6 disposés en vis-à-vis par rapport au bras 9.

La station d'échange 5 comprend également un buffer de stockage 11 pour batterie 4 disposé entre le bras 9 et l'emplacement de stationnement 6.

Le buffer de stockage 11 permet au bras robotisé 9 de stocker temporairement la batterie 4 déchargée d'un véhicule 2 de sorte à permettre au bras robotisé 9 de récupérer plus rapidement une batterie 4 chargée et ainsi diminuer le temps d'indisponibilité du véhicule 2.

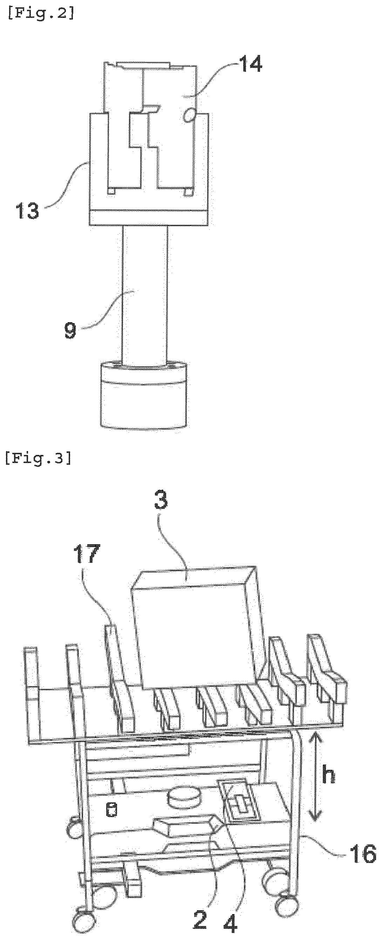

Chaque batterie 4 est ici équipée d'une poignée 12 apte à être tenue par une extrémité 13 du bras robotisé 9 en forme de pince, ici faite de deux crochets 14 comme représenté sur la figure 2.

Le bras robotisé 9 peut ainsi pincer la poignée 12 de la batterie 4 pour permettre son insertion/extraction verticale dans les véhicules 2 et les chargeurs 7.

De manière avantageuse, les véhicules 2 et les chargeurs 7 comprennent des plots de guidages 14 et des contacteurs 15 pour faciliter respectivement l'insertion des batteries et le contact électrique.

Le bras robotisé 9 est également conçu pour manipuler des boutons 15 de mise en marche/arrêt des véhicules 2.

Le bras robotisé 9 est également conçu pour permettre l'échange des batteries 4 dans des espaces réduits, par exemple lorsque le véhicules déplace un chariot 16 sur lequel est disposée une plateforme 17 de portage d'objets 3 surplombant la fente 10 du véhicule 2, comme représenté sur la figure 3.

Par espace réduit on entend un espace d'une hauteur h minimum de 100mm au dessus de la batterie 4.

L'installation 1 de manutention d'objets selon l'invention comprend également un système d'information 18 conçu pour gérer la flotte de véhicules 2.

Le système d'information est notamment conçu pour recevoir en temps réel des données numériques représentatives du niveau de charge des batteries des véhicules de la flotte et pour déterminer en retour un ordre de priorité selon lequel l'échange des batteries des véhicules de la flotte se fait en commençant par le véhicule ayant la batterie la moins chargée au véhicule ayant la batterie la plus chargée.

Grâce au système d'information 18, le temps de déplacement effectif des véhicules est augmenté, c'est-à-dire le temps de déplacement où les véhicules 2 transportent des objets 3 pour les trier, les stocker, les décharger, etc., alors que le temps d'indisponibilité des véhicules 2 en emplacement de stationnement 6 est diminué.

L'occupation des emplacements de stationnement 6 étant le facteur le plus limitant, le système d'information 18 est paramétré pour définir un niveau critique non constant correspondant à la vitesse maximale de travail de la station d'échange 5.

Aussi, si un véhicule 2 atteint ce niveau, c'est que lui et tous ceux qui ont un niveau de charge plus faible encourent le risque de tomber en panne.

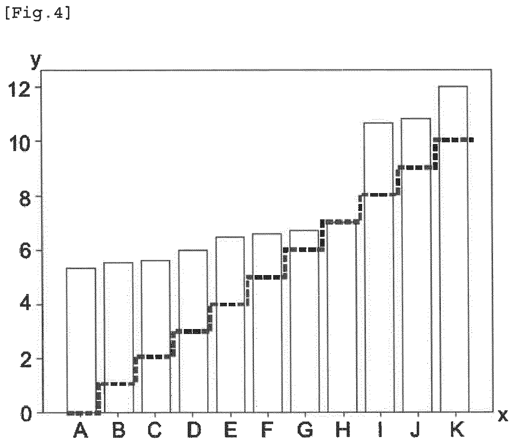

L'histogramme de la figure 4, représente justement différents niveaux de charge de batteries 4 sur l'axe des ordonnées Y et une liste de plusieurs véhicules 2 sur l'axe des abscisses X.

Chaque marche en pointillés correspond au temps nécessaire pour réaliser l'échange d'une batterie 4 dans un emplacement de stationnement 6 et l'escalier complet en pointillés correspond au niveau d'état de charge de la flotte de véhicules 2 qui forcerait la station à travailler à temps complet pour éviter toute panne.

Un véhicule 2 tombe donc en panne lorsque le niveau de charge de sa batterie 4 tombe sous ce niveau.

Le système d'information est donc conçu pour détecter cycliquement si la batterie d'un certain véhicule de la flotte atteint un niveau de charge critique correspondant à un niveau de charge le plus bas que peut présenter la batterie pour permettre audit certain véhicule de revenir vers la station d'échange et de se positionner sur ledit emplacement de stationnement une fois que les véhicules ayant des batteries présentant un niveau de charge inférieure au niveau de charge de la batterie dudit certain véhicule auront échangé leur batterie.

La fréquence du cycle de détection du niveau critique d'un véhicule correspondra par exemple au temps d'occupation de la station d'échange par un véhicule pour l'échange de sa batterie.

En réponse à cette détection, le système d'information est conçu pour forcer les véhicules dont le niveau de charge de batterie est inférieur au niveau de charge de la batterie du certain véhicule ayant atteint le niveau de charge critique à revenir vers la station d'échange et à se positionner les uns après les autres en suivant l'ordre de priorité sur ledit emplacement de stationnement pour l'échange de batterie.

Le système d'information est également conçu pour forcer lesdits véhicules à revenir vers la station d'échange et à se positionner sur ledit emplacement de stationnement pour l'échange de batterie à des intervalles de temps réguliers correspondant au temps d'occupation de l'emplacement de stationnement par un véhicule pour l'échange de sa batterie.

Le système d'information peut également être paramétré pour prendre en compte la distance la plus grande que pourrait parcourir ledit certain véhicule pour revenir à la station d'échange et définir en retour le niveau le plus bas que peut présenter la batterie du certain véhicule pour lui permettre de revenir vers la station d'échange et de se positionner sur ledit emplacement de stationnement.

La gestion de la flotte de véhicules par le système d'information permet ainsi de limiter le risque d'avoir un nombre de véhicules 2 de la flotte avec un faible niveau de charge sensiblement équivalent et devant être déplacer en même temps vers la station d'échange 6 pour un échange de batterie 4.

Le système d'information 18 est également paramétré de sorte qu'il considère un emplacement de stationnement 6 comme étant disponible lorsqu'aucun véhicule 2 n'est stationné et/ou lorsqu'aucun véhicule 2 n'est en cours de déplacement vers l'emplacement de stationnement 6 pour un échange de batterie 4.

Le système d'information 18 est également conçu pour ne pas forcer le retour d'un véhicule 2 vers la station d'échange lorsque le véhicule 2 transporte un objet 3.

Le système d'information pourra également fixer le niveau de charge critique à 5% au dessus du niveau de charge le plus bas que peut présenter la batterie pour permettre audit certain véhicule de revenir vers la station d'échange et de se positionner sur ledit emplacement de stationnement de sorte à garder une certaine marge pour éviter les pannes.

On comprendra que le système d'information 18 est également conçu pour mettre à jour en temps réel l'ordre de priorité de l'échange des batteries 4 par exemple à chaque fois qu'un véhicule 2 repart de la station d'échange 5 avec une batterie 4 chargée, qu'un véhicule 2 soit en panne pendant son déplacement ou bien qu'un emplacement de stationnement 6 soit en maintenance.

## Revendications

1. Installation (1) de manutention d'objets (3) comprenant une flotte de véhicules (2) de type robots navettes guidés automatiquement à distance pour le transport desdits objets, chaque véhicule embarquant une batterie conçue pour l'alimenter électriquement pour ses déplacements, l'installation comprenant une station d'échange (5) de batteries comprenant un emplacement de stationnement (6) partagé par la flotte de véhicules pour stationner un desdits véhicules et un bras robotisé (9) conçu pour échanger automatiquement une batterie déchargée d'un véhicule par une batterie chargée lorsque ledit véhicule est stationné sur l'emplacement de stationnement, ladite installation de manutention d'objets comprenant également un système d'information (18) conçu pour recevoir en temps réel des données numériques représentatives du niveau de charge des batteries des véhicules de la flotte et pour déterminer en retour un ordre de priorité selon lequel l'échange des batteries des véhicules de la flotte se fait en commençant par le véhicule ayant la batterie la moins chargée au véhicule ayant la batterie la plus chargée, **caractérisée en ce que** le système d'information est conçu pour détecter cycliquement si la batterie d'un certain véhicule de la flotte atteint un niveau de charge critique correspondant à un niveau de charge le plus bas que peut présenter la batterie pour permettre audit certain véhicule de revenir vers la station d'échange et de se positionner sur ledit emplacement de stationnement une fois que les véhicules ayant des batteries présentant un niveau de charge inférieure au niveau de charge de la batterie dudit certain véhicule auront échangé leur batterie, et **en ce qu'**en réponse à cette détection, le système d'information est conçu pour forcer lesdits véhicules dont le niveau de charge de batterie est inférieure au niveau de charge de la batterie dudit certain véhicule ayant atteint le niveau de charge critique à revenir vers la station d'échange et à se positionner les uns après les autres en suivant l'ordre de priorité sur ledit emplacement de stationnement pour l'échange de batterie.

2. Installation de manutention d'objets selon la revendication 1, **caractérisée en ce que** le système d'information est conçu pour forcer lesdits véhicules à revenir vers la station d'échange et à se positionner sur ledit emplacement de stationnement pour l'échange de batterie à des intervalles de temps réguliers correspondant au temps d'occupation de l'emplacement de stationnement par un véhicule pour l'échange de sa batterie.

3. Installation de manutention d'objets selon la revendication 1 ou 2, **caractérisée en ce que** le système d'information considère la distance la plus grande que pourrait parcourir ledit certain véhicule pour revenir à la station d'échange pour définir le niveau le plus bas de batterie.

4. Installation de manutention d'objets selon l'une quelconque des revendications 1 à 3, **caractérisée en ce que** la fréquence du cycle de détection du niveau critique d'un véhicule correspond au temps d'occupation de la station d'échange par un véhicule pour l'échange de sa batterie.

5. Installation de manutention d'objets selon l'une quelconque des revendications 1 à 4, **caractérisée en ce que** chaque véhicule comprend une fente (10) verticale ouverte sur le dessus conçue pour autoriser une insertion/extraction verticale des batteries par le bras robotisé.

6. Installation de manutention d'objets selon l'une quelconque des revendications 1 à 4, **caractérisée en ce que** la station de permutation comprend au moins un chargeur (7) de batterie en forme de bac ouvert sur le dessus conçu pour autoriser une insertion/extraction verticale des batteries par le bras robotisé.
